Europäisches Patentamt

European Patent Office

Office européen des brevets

(11) Publication number: **0 061 854**
**B1**

(12) **EUROPEAN PATENT SPECIFICATION**

(45) Date of publication of patent specification: **24.07.85**

(51) Int. Cl.⁴: **B 01 D 1/26,** B 01 D 1/30, C 02 F 1/04

(21) Application number: **82301252.1**

(22) Date of filing: **11.03.82**

(54) Distilling apparatus which operates according to the thermocompressor principle.

(30) Priority: **27.03.81 FI 810965**

(43) Date of publication of application:
**06.10.82 Bulletin 82/40**

(45) Publication of the grant of the patent:
**24.07.85 Bulletin 85/30**

(84) Designated Contracting States:
**AT BE CH DE FR GB IT LI NL SE**

(56) References cited:
**CH-A- 332 796**
**DE-A-1 517 363**
**DE-A-2 713 266**
**DE-A-2 840 271**
**GB-A- 732 773**
**GB-A-1 526 053**
**US-A-3 190 817**
**US-A-3 489 651**

(73) Proprietor: **OY-FINN-AQUA LTD.,**
**Hankasuontie 4-6**
**SF-00390 Helsinki 39 (FI)**

(72) Inventor: **Huhta-Koivisto, Esko**
**Saynavatie 4B**
**02170 Espoo 17 (FI)**

(74) Representative: **Lee, Philip Graham et al**
**MARKS & CLERK 57/60 Lincoln's Inn Fields**
**London WC2A 3LS (GB)**

### Description

This invention relates to a distilling apparatus which operates according to the thermocompressor principle, comprising a housing, a boiling vessel for the liquid to be distilled, a heat source for heating the liquid to be distilled in the boiling vessel, a feed line for conducting the liquid to be distilled into the boiling vessel, a means disposed to impart extra energy to the vapour formed in the boiling vessel, whereby the temperature of the vapour increases on the output side of the apparatus, and an output line for removing distillate from the distilling apparatus.

The principle of operation of a prior art distilling apparatus operating according to the thermocompressor principle is briefly as follows. The liquid to be distilled is heated in the boiling vessel, whereby the liquid to be distilled evaporates into the upper part of the boiling vessel and the temperature of the vapour is about 96°C. A compressor draws vapour from the upper part of the boiling vessel and imparts extra energy to the vapour, whereby the temperature of the vapour increases on the delivery side of the compressor to about 105°C. This hotter steam is conducted in a helical tube through the boiling vessel, whereby the vapour condenses to distillate, and the distillate is removed from the distilling apparatus as outflow. The condensing vapour naturally releases its heat content to the liquid to be distilled in the boiling vessel. The advantage of this prior art distilling apparatus is its low energy consumption, which is about 4 kW per 100 1/hr of liquid to be distilled. The greatest drawback is admittance of impurities into the evaporated distillate flowing through the compressor, by reason of which it is not possible to obtain absolutely pure distillate with this prior art distilling apparatus. Moreover, the distilling apparatus is exceedingly massive and bulky and causes objectional noise when operating.

This prior art distilling apparatus operating according to the thermocompressor principle has been improved in that the temperature of the vapour produced in the upper part of the boiling volume is higher than 100°C, usually about 105°C, whereby a pressure higher than atmospheric prevails everywhere in the boiling vessel. Correspondingly, the temperature of the vapour increases to about 120°C on the compresser's delivery side. In other respects, the good and bad features of this improved distilling apparatus are the same as those of the first described distilling apparatus.

Also known in the art is a distilling apparatus operating according to the thermocompressor principle wherein the temperature of the vapour of the liquid to be distilled is increased with the aid of a heat pump. In this apparatus two separate heat exchangers are used, one in the upper part of the boiling vessel and another in the lower part of the boiling vessel. This design is very expensive and requires a complex control mechanism.

Other relevant prior art is represented by the disclosure of U.S.A. Patent Specification 3,489,651 entitled "Distillation apparatus utilising frictional heating and compression of vapors".

The object of the invention is to provide an improved distilling apparatus operating according to the thermocompressor principle.

According to the present invention a distilling apparatus operating according to the thermocompressor principle is mainly characterized in that the distilling apparatus contains a droplet separator based on dynamic centrifugal separation, this droplet separator being so disposed relative to the wall of the boiling vessel as to define between the boiling vessel and the droplet separator a flow gap, through which the mixture of liquid to be distilled and of vapour, discharging from the heat exchange tube, is caused to flow, the vapour having been arranged, as the mixture of liquid to be distilled and of vapour flows through said flow gap, to flow through the droplet separator into means which has been provided to impart extra energy to the vapour, such means being a blower disposed within the distilling apparatus.

Other characteristic features of the distilling apparatus of the invention are stated in the appended claims 2 to 8.

With the aid of the distilling apparatus operating according to the thermocompressor principle of the invention numerous remarkable advantages are gained. In the distilling apparatus of the invention an exceedingly small water volume is required, and the initial heating of the liquid to be distilled is very fast. In the distilling apparatus of the invention, the heat quantities lost are returned to the process. The distilling apparatus of the invention affords efficient droplet separation owing to the dynamic centrifugal separator. The distilling apparatus of the invention is of small size and of simple construction and is above all, simple as regards its control techniques. The distilling apparatus of the invention also causes no objectionable noise. If desired, no shaft inlets whatsoever are required in the distilling apparatus of the invention, and this enables a distillate of very high purity to be obtained. All these valuable features of the distilling apparatus of the invention are furthermore combined with low energy consumption.

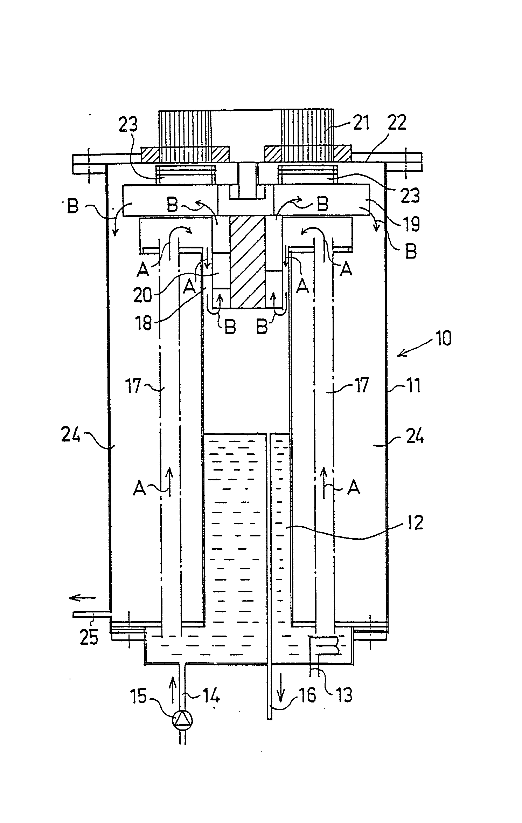

The invention is hereinafter described in detail by reference to an advantagous embodiment which is illustrated by way of non-limitative example in the accompanying drawing.

This drawing thus shows one form of distilling apparatus of the invention in schematic section.

In the embodiment depicted in the drawing the distilling apparatus 10 comprises a housing 11 which encloses a vessel 12 for boiling the liquid to be distilled. A heat source, for instance an electric heating coil 13, is provided to heat the liquid to be distilled in the boiling vessel 12. A pump 15 supplies liquid to be distilled by way of a feed line 14 into the boiling vessel 12. In the boiling vessel 12 there is a waste pipe 16, by which part of the liquid to be distilled continuously escapes. The waste pipe 16 thus serves as a highly efficient and simple liquid level stabilizer.

Furthermore, the distilling apparatus 10 comprises heat exchange tubes 17, through which a mixture of liquid to be distilled and of vapour is arranged to flow upwardly. Inside the vessel 12 there is a so-called flow gap, through which the mixture of liquid to be distilled and vapour flows downwardly. In the upper part of the distilling apparatus 10 there is a blower 19, from which there downwardly extends a droplet separator 20 with helical vanes. The flow gap 18 is thus defined between the wall of the boiling vessel and the droplet separator. A drive means 21 is provided to drive the blower means 19.

It is advantageous for the drive means 21 to be a short-circuited rotor ("squirrel cage") motor with planar air gap and which has been disposed to act as a so-called magnetic power input, to drive the blower 19. The blower 19 will then carry on its top face short-circuited stacks 23. Also shown is a vapour condensation space and a tubular connector 25, through which the distillate is removed from the distilling apparatus 10.

A further special feature of the distilling apparatus 10 of the invention is the circumstance that the heat exchange tubes 17 have been grouped around the boiling vessel 12. It is a further special feature that the heating means 13 has been disposed below the heat exchange tube 17 so that the mixture of heated liquid to be distilled, and of vapour that has formed, will rise upwardly in the heat exchange tubes 17, as indicated by arrows A. At the top end of hhe heat exchange tubes 17, the mixture composed of liquid to be distilled, and of vapour, discharges downwards through the flow gap 18, and the vapour flows through the droplet separator with helical vanes 20, as a flow indicated by arrow B, to the blower 19. The temperature and pressure of the vapour propelled by the blower means 19 increase, whereby the temperature increases from 95°C to about 105°C. The vapour flowing downwardly in the condensation space 24 condenses to distillate in contact with the heat exchange tubes 17, releasing its heat content to the liquid to be distilled. The distillate is withdrawn from the condensation space 24 through the tubular connector 25.

The liquid to be distilled may naturally be heated in the boiling vessel to a higher temperature as well, for instance to about 110°C, in which case, correspondingly, the temperature of the vapour discharging from the blower means 19 will be about 120°C. It is to be particularly noted in the distilling apparatus 10 of the invention that the mixture composed of liquid to be distilled and of vapour which flows in the heat exchange tubes 17 has a very high flow velocity, of the order of about 20 metres per second. Correspondingly, the flow velocity of the vapour passing through the droplet separator provided with helical vanes 20 is about 30 metres per second.

It is possible, of course, in the distilling apparatus 10 of the invention to use a conven-. tional shaft inlet for the blower 19 if no requirement of absolute purity is imposed on the liquid to be distilled. But if a distilling apparatus 10 for hospitals or equivalent is concerned, it will then be advantageous to use a magnetic power input, whereby absolutely pure distillation is achievable.

In the foregoing only one advantageous embodiment of the invention has been presented, but it should be obvious to a person skilled in the art that numerous modifications of it are possible within the scope of the invention as defined in the appended claims.

## Claims

1. Distilling apparatus (10) operating according to the thermocompressor principle, comprising a housing (11), a boiling vessel (12) for the liquid to be distilled, a heat source (13) for heating the liquid to be distilled in the boiling vessel (12), a feed line (14) for conducting the liquid to be distilled into the boiling vessel (12), means (19) disposed to impart extra energy to the vapour forming in the boiling vessel from the liquid to be distilled, whereby the temperature of the vapour increases on the output side of said means (19), a removal line (25) for withdrawing the distillate from the distilling apparatus (10), and wherein the distilling apparatus (10) contains at least one heat exchange tube (17), through which there flows a mixture composed of liquid to be distilled and of vapour, characterized in that the distilling apparatus (10) contains a droplet separator (20) based on dynamic centrifugal separation, this droplet separator being so disposed relative to the wall of the boiling vessel (12) as to define between the boiling vessel (12) and the droplet separator a flow gap (18), through which the mixture of liquid to be distilled and of vapour discharging from the heat exchange tube (17) is caused to flow, the vapour having been arranged, as the mixture of liquid to be distilled and of vapour flows through said flow gap (18), to flow through said droplet separator into said means (19), which has been provided to impart extra energy to the vapour, and that said means (19) is a blower disposed within the distilling apparatus (10).

2. Distilling apparatus according to claim 1, characterized in that the droplet separator has helical vanes (20).

3. Distilling apparatus according to claim 1 or 2, characterized in that the droplet separator is connected to the lower face of the blower means.

4. Distilling apparatus according to claim 1, 2 or 3, characterized in that the boiling vessel (12) contains a waste pipe (16) through which part of the liquid to be distilled continuously escapes from the boiling vessel (12), the waste pipe (16) being arranged to operate as a liquid level stabilizer in the boiling vessel (12).

5. Distilling apparatus according to any of claims 1 to 4, characterized in that the heat exchange tube (17) is disposed around the boiling vessel (12).

6. Distilling apparatus according to any of claims 1 to 5, characterized in that the heating means is disposed below the heat exchange tube (17).

7. Distilling apparatus according to any of claims 1 to 6, characterized in that the drive means (21) for the blower means (19) is a short circuited-rotor motor which has been provided as a power input through an end face (22) of the distilling apparatus (10) to drive the blower (19).

8. Distilling apparatus according to any of claims 1 to 7, characterized in that a vapour condensation space (24) surrounds the heat exchange tube (17).

## Patentansprüche

1. Destilliervorrichtung (10), die nach dem Thermokompressionsprinzip arbeitet, mit einem Gehäuse (11), einem Siedebehälter (12) für die zu destillierende Flüssigkeit, einer Wärmequelle (13) zum Erwärmen der in dem Siedebahälter (12) zu destillierenden Flüssigkeit, einer Zuleitung (14) zur Zufuhr der zu destillierenden Flüssigkeit in den Siedebehälter (12), einer Vorrichtung (19), die derart angeordnet ist, daß sie zusätzliche Energie auf den sich aus der zu destillierenden Flüssigkeit im Siedebehälter bildenden Dampf aufgibt, wodurch die Dampftemperatur auf der Ausgangsseite dieser Vorrichtung (19) ansteigt, einer Ableitung (25) zur Ableitung des Destillats aus der Destilliervorrichtung (10), wobei die Destilliervorrichtung (10) zumindest ein Wärmeaustauschrohr (17) enthält, durch das eine Mischung aus der zu destillierenden Flüssigkeit und Dampf fließt, dadurch gekennzeichnet, daß die Destilliervorrichtung (10) einen Tropfenabscheider (20) enthält, der auf der dynamischen Zentrifugalabscheidung basiert, wobei dieser Tropfenabscheider relativ zur Wand des Siedebehälters (12) derart angeordnet ist, daß er zwischen dem Siedebehälter (12) und dem Tropfenabscheider einen Fließspalt (18) bildet, durch den die Mischung aus der zu destillierenden Flüssigkeit und dem Dampf, der aus dem Wärmetauschrohr (17) ausfließt, fließen muß, wobei die Anordnung derart ausgebildet ist, daß der Dampf, wenn die Mischung aus der zu destillierenden Flüssigkeit und dem Dampf durch diesen Fließspalt (18) fließt, durch den Tropfenabscheider in die Vorrichtung (19) fließt, die dazu vorgesehen ist, zusätzliche Energie auf dem Dampf aufzugeben, und daß diese Vorrichtung (19) ein Gebläse ist, das innerhalb der Destilliervorrichtung (10) angeordnet ist.

2. Destilliervorrichtung nach Anspruch 1, dadurch gekennzeichnet, daß der Tropfenabscheider Spiralschaufeln (20) aufweist.

3. Destilliervorrichtung nach Anspruch 1 oder 2, dadurch gekennzeichnet, daß der Tropfenabscheider mit der Unterfläche der Gebläsevorrichtung verbunden ist.

4. Destilliervorrichtung nach einem der Ansprüche 1 bis 3, dadurch gekennzeichnet, daß der Siedebehälter (12) ein Überlaufrohr (16) enthält, durch das ein Teil der zu destillierenden Flüssigkeit kontinuierlich aus dem Siedebehälter (12) ausfließt, wobei das Überlaufrohr (16) derart angeordnet ist, daß es als Flüssigkeitsniveaustabilisator im Siedebehälter (12) wirkt.

5. Destilliervorrichtung nach einem der Ansprüche 1 bis 4, dadurch gekennzeichnet, daß das Wärmeaustauschrohr (17) um den Siedebehälter (12) angeordnet ist.

6. Destilliervorrichtung nach einem der Ansprüche 1 bis 5, dadurch gekennzeichnet, daß die Heizvorrichtung unterhalb des Wärmeaustauschrohrs (17) angeordnet ist.

7. Destilliervorrichtung nach einem der Ansprüche 1 bis 6, dadurch gekennzeichnet, daß die Antriebsvorrichtung (21) für die Gebläsevorrichtung (19) ein Kurzschlußläufermotor ist, der als Antriebsquelle durch eine Stirnfläche (22) der Destilliervorrichtung (10) vorgesehen ist, um das Gebläse (19) zu treiben.

8. Destilliervorrichtung nach einem der Ansprüche 1 bis 7, dadurch gekennzeichnet, daß ein Dampfkondensationsabschnitt (24) das Wärmetauschrohr (17) umgibt.

## Revendications

1. Appareil de distillation (10) fonctionnant selon le principe du thermocompresseur, comprenant un logement (11), un récipient d'ébullition (12) pour le liquide à distiller, une source de chaleur (13) pour chauffer le liquide à distiller dans le récipient d'ébullition (12), une conduite d'alimentation (14) pour amener le liquide à distiller dans le récipient d'ébullition (12), des moyens (19) disposés de manière à impartir un supplément d'énergie à la vapeur se formant dans le récipient d'ébullition à partir du liquide à distiller, ce grâce à quoi la température de la vapeur s'élève du côté de la sortie desdits moyens (19), une conduite d'extraction (25) pour retirer le distillat de l'appareil de distillation (10), et dans lequel l'appareil de distillation (10) contient au moins un tube d'échange de chaleur (17), à travers lequel s'écoule un mélange composé de liquide à distiller et de vapeur, caractérisé en ce que l'appareil de distillation (10) contient un séparateur de gouttes (20) basé sur une séparation centrifuge dynamique, ce séparateur de gouttes étant disposé par rapport à la paroi du récipient d'ébullition (12) de manière à définir entre le récipient d'ébullition (12) et le séparateur de gouttes un espace d'écoulement (18) à travers lequel le mélange de liquide à distiller et de vapeur sortant du tube d'échange de chaleur (17) est amené à s'écouler, la vapeur ayant été agencée, alors que le mélange de liquide à distiller et de vapeur s'écoule à travers ledit espace d'écoulement (18), pour s'écouler à travers le séparateur de gouttes et entrer dans lesdits moyens (19), qui ont été prévus pour impartir un supplément d'énergie à la vapeur, et en ce que lesdits moyens (19) consistent en une soufflante disposée à l'intérieur de l'appareil de distillation (10).

2. Appareil de distillation selon la revendication 1, caractérisé en ce que le séparateur de gouttes possède des aubes en hélice (20).

3. Appareil de distillation selon la revendication 1 ou 2, caractérisé en ce que le séparateur de gouttes est connecté à la face inférieure des moyens soufflants (19).

4. Appareil de distillation selon la revendication 1, 2 ou 3, caractérisé en ce que le récipient d'ébullition (12) contient un tuyau de décharge (16) à travers lequel une partie du liquide à distiller s'échappe en continu du récipient d'ébullition (12), le tuyau de décharge étant agencé pour tenir lieu de stabilisateur du niveau du liquide dans le récipient d'ébullition (12).

5. Appareil de distillation selon l'une quelconque des revendications 1 à 4, caractérisé en ce que le tube d'échange de chaleur (17) est disposé autour du récipient d'ébullition (12).

6. Appareil de distillation selon l'une quelconque des revendications 1 à 5, caractérisé en ce que les moyens de chauffage sont disposés au dessous du tube d'échange de chaleur (17).

7. Apparaeil de distillation selon l'une quelconque des revendications 1 à 6, caractérisé en ce que les moyens d'entraînement (21) pour les moyens soufflants (19) consistant en un moteur à rotor court-circuité qui a été prévu comme entrée d'énergie à travers une face d'extrémité (22) de l'appareil de distillation (10) pour entraîner la soufflante (19).

8. Appareil de distillation selon l'une quelconque des revendications 1 à 7, caractérisé en ce qu'un espace de condensation de vapeur (24) entoure le tube d'échange de chaleur (17).